# EUROPEAN PATENT SPECIFICATION

(11) **EP 1 638 350 B1**
(45) Date of publication and mention of the grant of the patent: **12.12.2012**
(21) Application number: 04738290.8
(22) Date of filing: 25.06.2004
(51) Int. Cl.: H04W 64/00

(54) **A processing method of providing subscriber user equipment location information to request side**
Verarbeitungsverfahren zur Bereitstellung von Teilnehmer-Benutzergeräte-Positionsinformationen für die Anforderungsseite
Procédé de traitement qui fournit au cote demandeur, des informations de position du materiel d'un utilisateur abonné

(30) Priority: 25.06.2003 CN 03137491
(43) Date of publication of application: 22.03.2006
(73) Proprietor: Huawei Technologies Co., Ltd., Shenzhen, Guangdong Province 518129 (CN)
(72) Inventor: DUAN, Xiaoqin Huawei Administration Building, Shenzhen Guangdong 518129 (CN)
(74) Representative: Körber, Martin Hans
(86) International application number: PCT/CN2004/000692
(87) International publication number: WO 2004/114688

(56) References cited:
- EP-A1- 1 320 270
- WO-A1-03/034770
- WO-A1-03/039187
- GB-A- 2 381 419
- "Digital cellular telecommunications system (Phase 2+); Universal Mobile Telecommunications System (UMTS); Location Services (LCS); Functional description; Stage 2 (3GPP TS 23.271 version 5.6.0 Release 5); ETSI TS 123 271" ETSI STANDARDS, EUROPEAN TELECOMMUNICATIONS STANDARDS INSTITUTE, SOPHIA-ANTIPO, FR, vol. 3-SA2, no. V560, March 2003 (2003-03), XP014007894 ISSN: 0000-0001

## Description

### Field of the Technology

The present invention relates to location techniques, particularly to a handling method for providing a client with the location estimate of a target user equipment (UE)

### Background of the Invention

The location service (LCS) of a mobile communications network is to obtain the location estimate of target UE by means of a location technique, where the target UE refers to a user terminal being located in a mobile communications network and the location information may be the geographical information expressed in latitude and longitude data or the location information with reference to local streets. The location information obtained by an LCS system may be provided for the target UE for use in self-location, for the communications system itself for use in area-specific billing or operational maintenance, or for other clients, for instance, agencies or individuals, requesting the location estimate of the target UE for use in value-added services. Therefore, location service has wide applications in such fields as emergency rescue, vehicle navigation and intelligent traffic system, job control and team management, mobile yellow page query, and enhanced network performance. In 3GPP, specifications of LCS as well as the operational mode, structure, state description, and message flow for LCS implementation have been described.

Document "Digital cellular telecommunications system (Phase 2+); Universal Mobile Telecommunications System (UMTS); Location Services (LCS); Functional description; Stage 2 (3GPP TS 23.271 version 5.6.0 Release 5); ETSI TS 123 271" ETSI STANDARDS; EUROPEAN TELECOMMUNICATIONS STANDARDS INSTUTUTE, SOPHIA-ANTIPO, FR, vol. 3-SA2, no. V560, March 2003 (2003-03), XP014007894 ISSN: 0000-0001 reveals the stage 2 of the locations service (LCS) feature in UMTS and GSM, which provides the mechanisms to support mobile location services for operators, subscribers and third party service providers.

Document GB 2 381 419 A reveals a method for authorizing location information request in a communication system. A requester signals a request for location information associated with a target user, wherein the request contains information identifying the requester of the location information. The location service LCS system verifies, after receiving the request, if the target user has authorized the requester to initiate provision of location information of the target user based on the identifying information. If the target user has authorized the requester to receive information associated with the location of the target user, the location information associated with the target user is provided to the requester via a service response message.

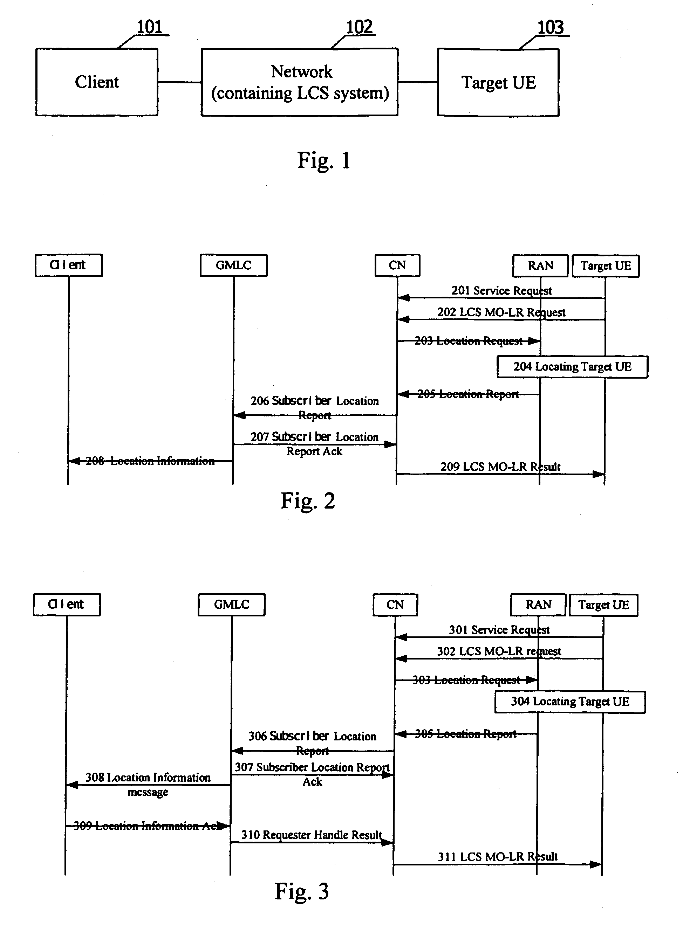

Figure 1 is a schematic showing the logical structure for implementing LCS. As shown in Figure 1, Client 101 requests Network 102 containing an LCS system for the location estimate of Target UE 103. Network 102 containing an LCS system makes legitimate authentication of Client 101 to check whether Target UE 103 permits Client 101 to request its location information. If Client 101 passes the legitimate authentication of Network 102 containing an LCS system, Network 102 will locate Target UE 103 and provide Client 101 with the location estimate of Target UE 103; otherwise, Network 102 containing an LCS system will refuse to provide Client 101 with the location estimate of Target UE 103. Functions implementing location service in an LCS system include gateway mobile location center (GMLC), home location register/home subscriber server (HLR/HSS), core network (CN), and radio access network (RAN).

So far, the process of handling a Mobile Original Location Request (MO-LR) has been defined in the 3GPP specifications. The handling of a MO-LR comprises a target UE requesting its own location information from an LCS system, the LCS system locating the target UE before returning the locating result to the target UE. Furthermore, at request of a target UE, the LCS system may provide the location estimate of the target UE for an external client. The client herein refers to LCS clients or other application clients that are able to handle the location estimate of a target UE rather than a client that requests the location estimate of a target UE in the usual sense.

Figure 2 is the flowchart for handling a MO-LR in the prior art. As shown in Figure 2, the handling process of a MO-LR comprises the steps of:

Step 201: A target UE sends a service request to CN via RAN, asking to establish a radio signaling connection with the network containing an LCS system. Then the network containing an LCS system may initiate a process of authentication and ciphering for the target UE. If the target UE passes the authentication of the network containing an LCS system, continue with step 202; otherwise, the network containing an LCS system will reject the service request from the target UE for establishing a connection of radio signaling and end the handling process of the current MO-LR.

Steps 202 to 205: The target UE sends a MO-LR to CN via RAN, requesting CN to locate the target UE. This MO-LR may further carry the information of an external client, requesting to provide the obtained location estimate of the target UE for this client. After receiving the MO-LR, CN sends to RAN a location request carrying the identity of the target UE. After receiving the location request, RAN will locate the target UE, and then return a location report of the target UE to CN. If RAN succeeds in locating the target UE, that is, it is able to acquire the location estimate of the target UE, then this location report will carry the location estimate of the target UE; otherwise, this location report of target UE will carry a value of error cause.

Step 206: After receiving the location report carrying the location estimate of the target UE and finding that the target UE requests for providing the location information thereof for an external client, CN sends the Subscriber location report carrying the location estimate of the target UE and the information of the client to an appropriate GMLC. Wherein the subscriber corresponds to the target UE.

Step 207: After receiving the location report of the target UE, the GMLC decides whether it is able to access the client. If the GMLC is able to access the client, it will send to CN the Subscriber Location Report Acknowledgement indicating that the client can be accessed successfully. Then perform step 208; otherwise, the Subscriber location report acknowledge indicating that the appropriate client cannot be accessed will be sent to CN.

Step 208: The GMLC, after sending the Location Report Acknowledgement to CN, sends to the client the location information carrying the location estimate of the target UE, providing the client with the location estimate of the target UE.

If the target UE does not request CN to provide the location information for an external client or CN receives a target UE location report carrying an error cause value, Steps 206 - 208 may be omitted.

Step 209: If RAN succeeds in locating the target UE, that is, CN receives a target UE location report carrying the location estimate of the target UE, a MO-LR Result carrying the location estimate of the target UE will be sent to the target UE; if CN finds, when receiving the target UE location report carrying the location estimate of the target UE, that the target UE requests CN to provide the location estimate of the target UE for an external client, CN will, after receiving the Subscriber Location Report Acknowledgement sent by GMLC, send a MO-LR Result to the target UE. This MO-LR Result will carry not only the target UE location information but also the information notifying the target UE that the location information thereof has been successfully sent to the designated client. This notifying information is obtained by CN based on the Subscriber Location Report Acknowledgement returned by GMLC in step 207 indicating that the external client can be successfully accessed. If RAN fails to locate the target UE, that is, CN receives a target UE location report carrying an error cause value, a MO-LR Result carrying the error cause value will then be sent to the target UE.

As can be seen from the above description of the 3GPP definition on the handling process by an LCS system of a MO-LR initiated by a target UE, when a target UE requests a network containing an LCS system for its own location information and requests the network containing an LCS system to provide the location estimate of the target UE for an external client, CN will notify the target UE that its location information has been correctly provided for the client after CN learned that GMLC is able to access the external client successfully. At this time, if the information about the client provided for CN is incorrect due to an error of the target UE, for instance, the client designated by the target UE does not support the handling of location service or has not stored the relevant data of the target UE, then CN will still notify the target UE that its location information has been successfully received even that the client fails to process the location estimate of the target UE. As a result, the target UE can not be notified about the actual situation of whether the client is able to process the location estimate of the UE, thus neither the LCS system nor the target UE is able to learn accurately the final result of the implementation of the location service.

### Summary of the Invention

In view of the above, the object of the present invention is to provide a handling method for providing a client with the location estimate of a target UE such that the LCS system is able to learn an accurate final result of the implementation of location service, and so is the target UE.

To achieve the above object, this invention presents a handling method for providing a client with the location estimate of a target User Equipment, UE, the method comprising the steps of:
upon the receipt of a Location Information message from the location service, LCS, system, said Location Information message carrying the location estimate of the target UE,
the client, handling the location estimate of the target UE,
characterised by
the client, sending to the LCS system Location Information Acknowledgement with a handling result.

The method further comprises: before the client receives the Location Information message carrying the location estimate of the target UE, a requestor originating a LCS location request against the target UE to the LCS system and requesting the LCS system to provide the location estimate of the target UE to the client, and the location estimate of the target UE was successfully obtained by the LCS system.

The method further comprises: the LCS system, upon the receipt of the Location Information Acknowledgement with the handling result, sending to the requestor an LCS Location Response carrying the handling result.

The step of the LCS system sending to the requestor an LCS Location Response carrying the handling result further comprises the steps of:
upon the receipt of the Location Information Acknowledgement with the handling result, Gateway Mobile Location Center, GMLC, in the LCS system sending to Core Network, CN, in the LCS system a Subscriber Location Report Acknowledgment, which carrying the handling result;
upon the receipt of the Subscriber Location Report Acknowledgment, the CN sending to the requestor an LCS Location Response carrying the handling result.

The method further comprises the client, upon the receipt of the Location Information message, handling the location estimate of the target UE, sending to the GMLC the Location Information Acknowledgement carrying the handling result.

The method further comprises: before the client sends to the LCS system the Location Information Acknowledgement with the handling result, GMLC in the LCS system sending to the CN in the LCS system the Subscriber Location Report Acknowledgement.

The method further comprises: before the client sends to the LCS system the Location Information Acknowledgement with the handling result, the LCS system sending to the requestor the LCS Location Response.

The method further comprises that the handling result comprises a success flag indicating that the location estimate has been handled successfully by the client.

The method further comprises that the handling result of the client comprises a failure flag indicating that the location estimate has been handled unsuccessfully by the client.

The method further comprises that the handling result comprises further the error cause.

The method further comprises that the requestor comprises the target UE being located or a third-party device other than the target UE.

The method further comprises that the CN comprises Mobile Switch Center, MSC, MSC Server or Serving GPRS Support Node, SGSN.

The method further comprises that the client comprises an LCS Client.

In accordance with the method provided by this invention, when an requestor requests the location estimate of a target UE and asks the LCS system to provide an external client with the location estimate of the target UE, a mechanism for the client to return to the LCS system an acknowledgement on whether the target UE location information can be handled is added after the LCS system sends to the client the location estimate of the target UE. In this way, the LCS system is able to learn the final performing result of the location service; furthermore, the LCS system returns to the requestor an acknowledgement about whether the client is able to handle the location estimate of the target UE such that the requestor is able to learn an accurate final performing result of the location service. In addition, two handling modes are presented by this invention, which can be used separately or in a combined way in practical applications, bringing not only better implementing results but also more flexible options.

### Brief Description of the Drawings

Figure 1 is a schematic diagram showing the logical structure of LCS implementation;
Figure 2 is the flowchart for handling a MO-LR in the prior art;
Figure 3 is the flowchart of a handling mode in accordance with this invention for a MO-LR carrying the information of a client;
Figure 4 is the flowchart of another handling mode in accordance with this invention for a MO-LR carrying the information of a client;
Figure 5 is the flowchart of an embodiment of this invention;
Figure 6 is the flowchart of another embodiment of this invention.

### Embodiments of the Invention

This invention is hereinafter described in detail with reference to the accompanying drawings.

In accordance with this invention, when an requestor requests the location estimate of a target UE and asks the LCS system to provide an external client with the location estimate of the target UE, a mechanism for the client to return to GMLC an acknowledgement on whether the target UE location information can be handled is added after GMLC sends to the client the location estimate of the target UE such that GMLC is able to return to CN the acknowledgement on whether the client is able to handle the location estimate of the target UE, and furthermore, CN is able to return to the requestor an acknowledgement about whether the client is able to handle the location estimate of the target UE successfully, making the requestor able to learn an accurate final performing result of the location service. The requestor comprises the target UE itself or a third-party device other than the target UE and the client.

Figure 3 is the flowchart of a handling mode in accordance with this invention for a MO-LR carrying the information of a client. As shown in Figure 3, a handling process for a MO-LR carrying the information of a client comprises the steps of:

Steps 301 - 308 are primarily the same as steps 201 - 208.

Step 309: After receiving the Location Information message, the client returns to GMLC Location Information Acknowledgement, which carries an appropriate flag indicating whether the client is able to handle the target UE location information successfully. For instance, if the client is able to handle the target UE location information successfully, the Location Information Acknowledgement will carry the flag of successful handling; otherwise, the Location Information Acknowledgement will carry the flag of failed handling. Furthermore, when the client is able to handle the target UE location information successfully, the Location Information Acknowledgement may carry no parameter; when the client is unable to handle the target UE location information successfully, the Location Information Acknowledgement may as well carry the appropriate cause of failure, for example, the cause may be that the client does not support handling of location service or has not found the appropriate user data of the target UE.

Step 310: After receiving the Location Information Acknowledgement, GMLC returns to CN an appropriate Client Handle Result message depending on the flag carried in the Location Information Acknowledgement indicating whether the client is able to handle the target UE location information successfully. This Client Handle Result message may also carry an appropriate flag, if GMLC receives the Location Information Acknowledgement indicating that the client is able to handle the target UE location information successfully, GMLC will then return to CN a Client Handle Result message carrying the flag of success, notifying CN that the client is able to handle the target UE location information; if GMLC receives the target UE Location Information Acknowledgement indicating that the client is unable to handle the target UE location information successfully, GMLC will then return to CN a Client Handle Result message carrying the flag of failure, notifying CN that the client is unable to handle the target UE location information successfully. In addition, when the client is able to handle the target UE location information successfully, the Client Handle Result message may carry no parameter; when the client is unable to handle the target UE location information successfully, the Client Handle Result message may carry an appropriate cause of failure, for instance, the client does not support handling of location service.

Step 311: If RAN succeeds in locating the target UE, that is, CN receives Location Report carrying the target UE location information in step 305, CN will at this time receive a Client Handle Result message. In accordance with the flag in this Client Handle Result message indicating whether the client is able to handle the location information, CN returns to the target UE an appropriate LCS MO-LR Result. This LCS MO-LR Result may carry an appropriate flag, if CN receives the Client Handle Result indicating that the client is able to handle the target UE location information, CN will then return to the target UE the LCS MO-LR Result carrying the flag of success, notifying the target UE that the client is able to handle the location information successfully and has accept the information at the same time of providing the target UE with its own location information; if CN receives the Client Handle Result indicating that the client is unable to handle the target UE location information successfully, CN will then return to the target UE the LCS MO-LR Result carrying the flag of failure, notifying the target UE that the client is unable to handle the location information successfully at the same time of providing the target UE with its own location information. In addition, when the client is able to handle the target UE location information successfully, the LCS MO-LR Result may carry only the target UE location information; when the client is unable to handle the target UE location information successfully, the LCS MO-LR Result may also carry the appropriate cause of failure, for instance, the client does not support handling of location service. As can be seen herein, by carrying an appropriate flag in the LCS MO-LR Result that is returned to the target UE, the target UE is able to learn a clear final performing result of the location service.

By adding the steps of the client returning to GMLC the target UE Location Information Acknowledgement and GMLC returning to CN the Client Handle Result, the above described handling process for a MO-LR carrying the information of a client enables each of the functions of the LCS system to learn an accurate final performing result of the location service while having less impact on the former handling process for a MO-LR carrying the information of a client.

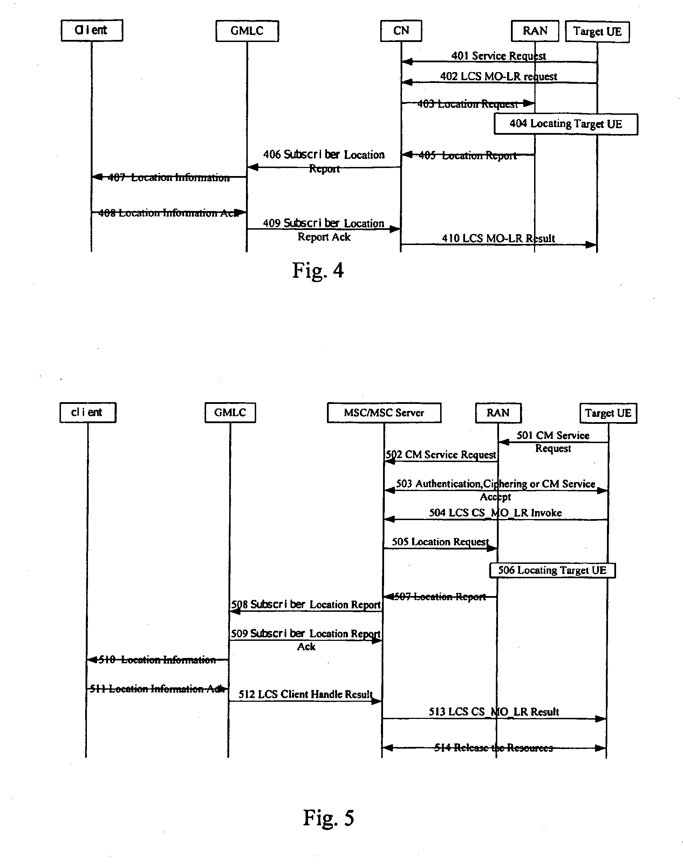

Figure 4 is the flowchart of another handling mode in accordance with this invention for a MO-LR carrying the information of a client. As shown in Figure 4, another handling process for a MO-LR carrying the information of a client comprises the steps of:

Steps 401 - 406 are primarily the same as steps 201 - 206.

Step 407: After receiving the Subscriber Location Report sent by CN, GMLC sends to the client the Location Information message carrying the target UE location information, providing the client with the target UE location information.

Step 408 is primarily the same as step 309.

Step 409: After receiving the Location Information Acknowledgement, GMLC returns to CN an appropriate Subscriber Location Report Acknowledgement in accordance with the flag in the Location Information Acknowledgement indicating whether the client is able to handle the target UE location information successfully. This Subscriber Location Report Acknowledgement may carry an appropriate flag, if GMLC receives the Location Information Acknowledgement indicating that the client is able to handle the target UE location information successfully, GMLC will then return to CN Subscriber Location Report Acknowledgement carrying the flag of successful handling, notifying CN that the client is able to handle the target UE location information successfully; if GMLC receives the Location Information Acknowledgement indicating that the client is unable to handle the target UE location information successfully, GMLC will then return to CN the Subscriber Location Report Acknowledgement carrying the flag of failed handling, notifying CN that the client is unable to handle the target UE location information successfully. Furthermore, when the client is able to handle the target UE location information successfully, the Subscriber Location Report Acknowledgement may carry no parameter; when the client is unable to handle the target UE location information successfully, the Subscriber Location Report Acknowledgement may as well carry the appropriate cause of failure, for example, the cause may be that the client does not support handling of location service.

Step 410: If RAN succeeds in locating the target UE, that is, CN receives in step 405 the Location Report carrying the target UE location information, CN will at this time receive a Subscriber Location Report Acknowledgement. In accordance with the flag in this Location Report Acknowledgement indicating whether the client is able to handle the target UE location information, CN returns to the target UE an appropriate LCS MO-LR Result. This LCS MO-LR Result may carry an appropriate flag, if CN receives the Subscriber Location Report Acknowledgement indicating that the client is able to handle the target UE location information, CN will then return to the target UE the LCS MO-LR Result carrying the flag of success, notifying the target UE that the client is able to handle the location information successfully and has accept the information at the same time of providing the target UE with its own location information; if CN receives the Subscriber Location Report Acknowledgement indicating that the client is unable to handle the target UE location information successfully, CN will then return to the target UE the LCS MO-LR Result carrying the flag of failure, notifying the target UE that the client is unable to handle the location information successfully at the same time of providing the target UE with its own location information. In addition, when the client is able to handle the target UE location information successfully, the LCS MO-LR Result may carry only the target UE location information; when the client is unable to handle the target UE location information successfully, the LCS MO-LR Result may also carry the appropriate cause of failure, for instance, the client does not support handling of location service. As can be seen herein, by carrying an appropriate flag in the LCS MO-LR Result that is returned to the target UE, the target UE is able to learn a definite final performing result of the location service.

In the above described handling process for a MO-LR carrying the information of a client, a step of the client returning to GMLC the Location Information Acknowledgement is added. And GMLC returns to CN the Subscriber Location Report Acknowledgement after receiving the Location Information Acknowledgement returned by the client, thus utilizing the message in the former handling process for a MO-LR carrying the information of a client and accordingly, reducing the number of interactive messages.

The above two handling modes for a MO-LR carrying the information of a client may be combined with each other. GMLC decides whether the external client can be accessed, if yes, GMLC will first send to CN a Subscriber Location Report Acknowledgement carrying the flag of successful access, then send to CN the appropriate Client Handle Result message after receiving the handling result of the target UE location information returned by the client; if not, GMLC will return the Subscriber Location Report Acknowledgement carrying the flag of failed access directly to CN.

Figure 5 is the flowchart of an embodiment of this invention. As shown in Figure 5, in this embodiment, the handling process for a CS_MO_LR (Circuit Switched Mobile Original Location Request) Invoke carrying the information of a client comprises the steps of:

Steps 501 - 503: A target UE sends to RAN a CM (call management) Service Request, asking to establish a radio signaling connection with the network. After receiving the CM Service Request, RAN forwards the CM Service Request to the Mobile Switching Center (MSC)/MSC Server. After receiving the CM Service Request, MSC/MSC Server makes interaction with the target UE and performs authentication and ciphering of the target UE. If the target UE passes the authentication, MSC/MSC Server will notify the target UE that the CM Service Request initiated by the UE has been accepted; otherwise, MSC/MSC Server will notify the target UE that the CM Service Request initiated by the UE is rejected.

Steps 504 - 507: After passing the authentication by MSC/MSC Server, the target UE sends to MSC/MSC Server an LCS CS_MO_LR Invoke, requesting the network containing an LCS system to locate the UE. The LCS CS_MO_LR Invoke may also carry the information of an external client, requesting MSC/MSC Server to provide the target UE location information for the corresponding external client. After receiving the LCS CS_MO_LR Invoke, MSC/MSC Server sends to RAN a Location Request for the target UE. After receiving the Location Request and succeeding in locating the target UE, RAN sends to MSC/MSC Server a Location Report of the target UE carrying the location estimate of the target UE.

Steps 508 - 509: After receiving the Location Report, MSC/MSC Server sends to GMLC a Subscriber Location Report carrying the location estimate of the target UE and the information of an external client after finding that the target UE requests to provide the external client with the location estimate of the target UE. After receiving the Subscriber Location Report and deciding that the external client can be accessed, GMLC sends to MSC/MSC Server a Subscriber Location Report Acknowledgement indicating that the external client can be accessed.

Steps 510 - 511: After sending to MSC/MSC Server the Subscriber Location Report Acknowledgement, GMLC sends to the client the Location Information carrying the location estimate of the target UE. After receiving the Location Information, the client will return to GMLC a Location Information Acknowledgement carrying the cause for failure if it is unable to handle the location estimate of the target UE because it does not support the location service or it has no subscriber data of that target UE.

Steps 512 - 514: After receiving the Location Information Acknowledgement, GMLC returns to MSC/MSC Server an LCS Client Handle Result carrying the cause for failure, notifying MSC/MSC Server that the client is unable to handle the location estimate of the target UE. After receiving the LCS Client Handle Result, MSC/MSC Server returns to the target UE an LCS CS_MO_LR Result, which will carry the target UE location information and further, the cause for failure so as to notify the target UE that the external client is unable to handle the location information successfully. MSC/MSC Server then ends the handling of the current CS_MO_LR Invoke carrying the information of the client and releases the LCS system resources occupied.

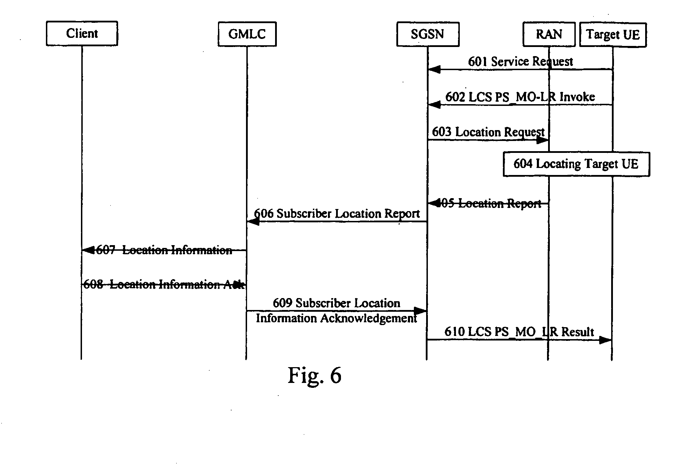

Figure 6 is the flowchart of another embodiment of this invention. As shown in Figure 6, in this embodiment, the handling process for a PS_MO_ LR (Packet Switched Mobile Original Location Request) Invoke carrying the information of a client comprises the steps of:

Steps 601 - 602: A target UE sends to Service GPRS Supporting Node (SGSN) a CM Service Request, asking to establish a radio signaling connection with the network. After establishing a Packet Switched signaling connection with the network, the target UE sends to SGSN an LCS PS_MO_LR Invoke, requesting the network containing an LCS system to locate the UE. The LCS CS_MO_LR Invoke may also carry the information of an external client, requesting SGSN to provide the target UE location information for the corresponding external client.

Steps 603 - 605: After receiving the LCS PS_MO_LR Invoke, SGSN sends to RAN a Location Request for the target UE. After receiving the Location Request and succeeding in locating the target UE, RAN sends to SGSN a Location Report of the target UE carrying the location estimate of the target UE.

Step 606: After receiving the Location Report, SGSN sends to GMLC a Subscriber Location Report carrying the location estimate of the target UE and the information of an external client after finding that the target UE requests to provide the external client with the location estimate of the target UE.

Steps 607 - 608: After receiving the Subscriber Location Report, GMLC sends to the external client the Location Information message carrying the location estimate of the target UE. After receiving the Location Information, the client will handle the location estimate of the target UE and return to GMLC a Location Information Acknowledgement carrying the success flag if it is able to handle the target UE location information successfully.

Steps 609 - 610: After receiving the Location Information Acknowledgement, GMLC returns to SGSN a Subscriber Location Report Acknowledgement carrying the success flag, notifying SGSN that the client is able to handle the location estimate of the target UE. After receiving the Subscriber Location Report Acknowledgement, SGSN returns to the target UE an LCS PS_MO_LR Result, which will carry the target UE location information and further, the success flag to notify the target UE that the external client is able to handle the location information successfully. SGSN then ends the handling of the current PS_MO_LR Invoke carrying the information of the client.

The LCS system may also send to the target UE the location estimate of the target UE before receiving the handling result of the client; then return to the target UE the handling result of the client after the result is received.

The above solution scheme is equally applicable to the situation where the location of a target UE is initiated by a third-party device which at the same time requests to provide the target UE location information for a client. As the specific implementing process is primarily the same, no further description will be given.

It is appreciated that the above description is about preferred embodiments of this invention and therefore not to be construed as limits to the protection scope thereof.

## Claims

1. A handling method for providing a client with the location estimate of a target User Equipment, UE, the method comprising the steps of:
upon the receipt of a Location Information message from the location service, LCS, system, said Location Information message carrying the location estimate of the target UE (308),
the client, handling the location estimate of the target UE,
**characterised by**
the client, sending to the LCS system Location Information Acknowledgement with a handling result (309).

2. A handling method according to Claim 1, further comprising: before the client receives the Location Information message carrying the location estimate of the target UE, a requestor originating a LCS location request against the target UE to the LCS system and requesting the LCS system to provide the location estimate of the target UE to the client (301, 302, 303, 304, 305), and the location estimate of the target UE was successfully obtained by the LCS system (306).

3. A handling method according to Claim 1 or Claim 2, further comprising:
the LCS system, upon the receipt of the Location Information Acknowledgement with the handling result, sending to the requestor an LCS Location Response carrying the handling result (310, 311).

4. A handling method according to Claim 3, wherein the step of the LCS system sending to the requestor an LCS Location Response carrying the handling result further comprises the steps of:
upon the receipt of the Location Information Acknowledgement with the handling result, Gateway Mobile Location Center, GMLC, in the LCS system sending to Core Network, CN, in the LCS system a Subscriber Location Report Acknowledgment, which carrying the handling result (310);
upon the receipt of the Subscriber Location Report Acknowledgment, the CN sending to the requestor an LCS Location Response carrying the handling result (311).

5. A handling method according to Claim 1, wherein
the client, upon the receipt of the Location Information message, handling the location estimate of the target UE, sending to the GMLC the Location Information Acknowledgement carrying the handling result (309).

6. A handling method according to Claim 5, further comprising: before the client sends to the LCS system the Location Information Acknowledgement with the handling result, GMLC in the LCS system sending to the CN in the LCS system the Subscriber Location Report Acknowledgement (307).

7. A handling method according to Claim 1 or Claim 5, further comprising:
before the client sends to the LCS system the Location Information Acknowledgement with the handling result, the LCS system sending to the requestor the LCS Location Response.

8. A handling method according to Claim 1, wherein the handling result comprises a success flag indicating that the location estimate has been handled successfully by the client.

9. A handling method according to Claim 1, wherein the handling result of the client comprises a failure flag indicating that the location estimate has been handled unsuccessfully by the client.

10. A handling method according to Claim 9, wherein the handling result comprises further the error cause.

11. A handling method according to Claim 1, wherein the requestor comprises the target UE being located or a third-party device other than the target UE.

12. A handling method according to Claim 4, wherein the CN comprises Mobile Switch Center, MSC, MSC Server or Serving GPRS Support Node, SGSN.

13. A handling method according to Claim 1, wherein the client comprises an LCS Client.

## Patentansprüche

1. Abwicklungsverfahren, um einem Client die Ortsschätzung eines Ziel-Benutzergeräts bzw. -UE bereitzustellen, wobei das Verfahren die folgenden Schritte umfasst:
beim Empfang einer Ortsinformationsnachricht von dem Ortsdienst- bzw. LCS-System, wobei die Ortsinformationsnachricht die Ortsschätzung des Ziel-UE führt (308),
wickelt der Client die Ortsschätzung des Ziel-UE ab,
**dadurch gekennzeichnet, dass**
der Client die Ortsinformationsbestätigung dem LCS-System mit einem Abwicklungsergebnis sendet (309).

2. Abwicklungsverfahren nach Anspruch 1, ferner umfassend: bevor der Client die Ortsinformationsnachricht empfängt, die die Ortsschätzung des Ziel-UE führt, originiert ein Anforderer eine LCS-Ortsanforderung gegenüber dem Ziel-UE an das LCS-System und fordert von dem LCS-System an, die Ortsschätzung des Ziel-UE dem Client (301, 302, 303, 304, 305) bereitzustellen, und die Ortsschätzung des Ziel-UE wurde erfolgreich durch das LCS-System erhalten (306).

3. Abwicklungsverfahren nach Anspruch 1 oder Anspruch 2, ferner umfassend:
beim Empfang der Ortsinformationsbestätigung mit dem Abwicklungsergebnis sendet das LCS-System eine LCS-Ortsantwort, die das Abwicklungsergebnis führt, zu dem Anforderer (310, 311).

4. Abwicklungsverfahren nach Anspruch 3, wobei der Schritt des Sendens einer LCS-Ortsantwort, die das Abwicklungsergebnis führt, zu dem Anforderer durch das LCS-System, ferner die folgenden Schritte umfasst:
beim Empfang der Ortsinformationsbestätigung mit dem Abwicklungsergebnis sendet ein Gateway Mobile Location Center GMLC in dem LCS-System eine Subscriber Location Report Acknowledgement, die das Abwicklungsergebnis führt, zu dem Core Network CN (310);
beim Empfang der Subscriber Location Report Acknowledgement sendet das CN eine LCS-Ortsantwort, die das Abwicklungsergebnis führt, zu dem Anforderer (311).

5. Abwicklungsverfahren nach Anspruch 1, wobei
der Client bei Empfang der Ortsinformationsnachricht die Ortsschätzung des Ziel-UE abwickelt und die Ortsinformationsbestätigung, die das Abwicklungsergebnis führt, zu dem GMLC sendet (309).

6. Abwicklungsverfahren nach Anspruch 5, ferner umfassend: bevor der Client die Ortsinformationsbestätigung mit dem Abwicklungsergebnis zu dem LCS-System sendet, sendet das GMLC in dem LCS-System die Subscriber Location Report Acknowledgement zu dem CN in dem LCS-System (307).

7. Abwicklungsverfahren nach Anspruch 1 oder Anspruch 5, ferner umfassend:
bevor der Client die Ortsinformationsbestätigung mit dem Abwicklungsergebnis zu dem LCS-System sendet, sendet das LCS-System die LCS-Ortsantwort zu dem Anforderer.

8. Abwicklungsverfahren nach Anspruch 1, wobei das Abwicklungsergebnis ein Erfolg-Flag umfasst, das angibt, dass die Ortsschätzung erfolgreich durch den Client abgewickelt wurde.

9. Abwicklungsverfahren nach Anspruch 1, wobei das Abwicklungsergebnis des Client ein Misserfolg-Flag umfasst, das angibt, dass die Ortsschätzung erfolglos durch den Client abgewickelt wurde.

10. Abwicklungsverfahren nach Anspruch 9, wobei das Abwicklungsergebnis ferner die Fehlerursache umfasst.

11. Abwicklungsverfahren nach Anspruch 1, wobei der Anforderer das Ziel-UE, das lokalisiert wird, oder eine von dem Ziel-UE verschiedene Dritt-Einrichtung umfasst.

12. Abwicklungsverfahren nach Anspruch 4, wobei das CN einen MSC-Server der Mobilvermittlungsstelle MSC oder einen Serving GPRS Support Node SGSN umfasst.

13. Abwicklungsverfahren nach Anspruch 1, wobei der Client einen LCS-Client umfasst.

## Revendications

1. Procédé de prise en charge pour fournir à un client une estimation de position d'un Equipement Utilisateur, UE, cible, le procédé comprenant les étapes suivantes :
à la réception d'un message d'Informations de Position provenant du système de service de localisation, LCS, l'inclusion dans ledit message d'Informations de Position de l'estimation de position de l'UE cible (308),
la prise en charge, par le client, de l'estimation de position de l'UE cible,
**caractérisé par**
l'envoi, par le client, au système LCS d'un Acquittement d'Informations de Position avec un résultat de prise en charge (309).

2. Procédé de prise en charge selon la revendication 1, comprenant en outre : avant que le client reçoive le message d'Informations de Position incluant l'estimation de position de l'UE cible, l'envoi, par un demandeur, d'une requête de position LCS par rapport à l'UE cible au système LCS et la requête, par le demandeur, auprès du système LCS de fournir l'estimation de position de l'UE cible au client (301, 302, 303, 304, 305), et l'estimation de position de l'UE cible a été correctement obtenue par le système LCS (306).

3. Procédé de prise en charge selon la revendication 1 ou la revendication 2, comprenant en outre :
l'envoi, par le système LCS au demandeur, à la réception de l'Acquittement d'Informations de Position avec le résultat de prise en charge, d'une Réponse de Position LCS incluant le résultat de prise en charge (310, 311).

4. Procédé de prise en charge selon la revendication 3, dans lequel l'étape d'envoi par le système LCS au demandeur d'une Réponse de Position LCS incluant le résultat de prise en charge comprend en outre les étapes suivantes :
à la réception de l'Acquittement d'Informations de Position avec le résultat de prise en charge, l'envoi par un Centre de Localisation Mobile Passerelle, GMLC, dans le système LCS à un Réseau Coeur, CN, dans le système LCS d'un Acquittement de Rapport de Position d'Abonné, lequel inclut le résultat de prise en charge (310) ;
à la réception de l'Acquittement de Rapport de Position d'Abonné, l'envoi par le CN au demandeur d'une Réponse de Position LCS incluant le résultat de prise en charge (311).

5. Procédé de prise en charge selon la revendication 1, dans lequel l'envoi, par le client prenant en charge l'estimation de position de l'UE cible, à la réception du message d'Informations de Position, de l'Acquittement d'Informations de Position incluant le résultat de prise en charge (309).

6. Procédé de prise en charge selon la revendication 5, comprenant en outre : avant l'envoi par le client au système LCS de l'Acquittement d'Informations de Position avec le résultat de prise en charge, l'envoi par le GMLC dans le système LCS au CN dans le système LCS de l'Acquittement de Rapport de Position d'Abonné (307).

7. Procédé de prise en charge selon la revendication 1 ou la revendication 5, comprenant en outre : avant l'envoi par le client au système LCS de l'Acquittement d'Informations de Position avec le résultat de prise en charge, l'envoi par le système LCS au demandeur de la Réponse de Position LCS.

8. Procédé de prise en charge selon la revendication 1, dans lequel le résultat de prise en charge comprend un fanion de succès indiquant que l'estimation de position a été correctement prise en charge par le client.

9. Procédé de prise en charge selon la revendication 1, dans lequel le résultat de prise en charge comprend un fanion d'échec indiquant que l'estimation de position n'a pas été correctement prise en charge par le client.

10. Procédé de prise en charge selon la revendication 9, dans lequel le résultat de prise en charge comprend en outre la cause de l'erreur.

11. Procédé de prise en charge selon la revendication 1, dans lequel le demandeur comprend l'UE cible localisé ou un dispositif tiers autre que l'UE cible.

12. Procédé de prise en charge selon la revendication 4, dans lequel le CN comprend un Centre de Commutation de Services Mobiles, MSC, un Serveur MSC ou un Noeud de Support de GPRS de Desserte, SGSN.

13. Procédé de prise en charge selon la revendication 1, dans lequel le client comprend un Client LCS.
